# EUROPÄISCHE PATENTANMELDUNG

(11) **EP 1 035 334 A1**
(43) Veröffentlichungstag der Anmeldung: **13.09.2000**
(21) Anmeldenummer: 00810185.9
(22) Anmeldetag: 06.03.2000
(51) Int. Cl.: F16B 12/46

(54) **Kantenverbindung**

(30) Priorität: 08.03.1999 CH 42599
(71) Anmelder: Reinhard, Remo, 6074 Giswil (CH)
(72) Erfinder: Reinhard, Remo, 6074 Giswil (CH)
(74) Vertreter: Patentanwaltsbüro Feldmann AG

(57) **Zusammenfassung**

Es wird eine Kantenverbindung aus einem mindestens zweischenkligen Kantenprofil (20) und mindestens zwei Flächenelementen (10,10') vorgeschlagen, wobei Kantenprofil (20) und Flächenelemente (10,10') miteinander klemmend lösbar verbindbar sind. An der Innenseite der Schenkel (21,22) des Kantenprofiles (20) sind Klemmelemente (23,24) angeordnet und die Flächenelemente (10,10') weisen an ihren Aussenseiten Klemmnuten (12,12') auf. Im verbundenen Zustand greifen die Klemmelemente (23,24) in die Klemmnuten (12,12') kraftschlüssig ein und das Kantenprofil (20) erstreckt sich mindestens annähernd über die gesamte Länge der Aussenkanten (11,11').

## Beschreibung

Die vorliegende Erfindung betrifft eine Kantenverbindung für Flächenelemente von Möbeln und möbelähnlichen Konstruktionen gemäss des Oberbegriffes des Patentanspruches 1.

Unter einer Kantenverbindung wird hier die Verbindung von zwei Flächenelementen mittels einem Kantenprofil verstanden, wobei die Flächenelemente entlang einer gemeinsamen Kante aneinanderstossen.

Zur lösbaren Verbindung von Flächenelementen eines Möbelkorpus sind die verschiedensten Systeme bekannt. Ueblicherweise werden Flächenelemente eines Möbelkorpus mittels Verbindungselementen und Spannelementen, wie zum Beispiel in der DE-A-195 32 456 beschrieben, miteinander verbunden. Die Verbindungs- und Spannelemente sind dabei entweder in speziell angepassten Ausnehmungen in den Flächenelementen versenkt, oder sie sind mehr oder weniger störend an den Aussen- oder Innenseiten der Flächenelemente angebracht.

Es sind auch Systeme bekannt, bei denen Flächenelemente in einen selbsttragenden Rahmen aus Metall eingepasst werden, wobei der Rahmen aus Profilen, die über Eckstücke miteinander verbunden sind, zusammengesetzt ist.

Die Kunden im Möbelsektor verlangen in zunehmendem Masse, dass Möbel nach dem Kauf sofort mitgenommen werden können, schnell und einfach zu montieren sind. Gleichzeitig legen sie aber hohen Wert auf Stabilität einerseits und ansprechendes Design andererseits.
Die Möbel müssen also vom Anbieter platzsparend gelagert werden können und für den Käufer einfach zu transportieren und zu montieren sein. Die Montage und die Demontage sollte dabei vorzugsweise ohne Werkzeug möglich sein.

Die Aufgabe der vorliegenden Erfindung ist es eine Kantenverbindung zur Verfügung zur stellen, die einerseits die oben genannten Nachteile nicht aufweist und andererseits die oben genannten Anforderungen erfüllt. Mit einem Minimum an benötigten Bauteilen muss ein höchstmögliches Mass an Konstruktionsvarianten erreicht werden können.
Die erfindungsgemässe Kantenverbindung übernimmt zudem eine Funktion als Kantenschutz und kann gleichzeitig als markantes Designelement für das Erscheinungsbild des Möbelstückes genutzt werden.

Diese Aufgabe wird durch eine Vorrichtung gemäss der kennzeichnenden Merkmale des Anspruches 1 gelöst.
Weitere Ausführungsvarianten ergeben sich aus der Beschreibung und den abhängigen Ansprüchen.
In den Zeichnungen sind Ausführungsbeispiele des Erfindungsgegenstandes dargestellt und in der nachfolgenden Beschreibung erläutert. Es zeigt:
- Figur 1a: eine perspektivische Ansicht einer Ausführungsform der erfindungsgemässen Kantenverbindung;
- Figur 1b: eine perspektivische Ansicht der Kantenverbindung gemäss Figur 1 in auseinandergebautem Zustand;
- Figur 1c: einen Querschnitt durch die Kantenverbindung gemäss der Figuren 1a und 1b;
- Figur 2a: eine perspektivische Ansicht einer weiteren Ausführungsform der erfindungsgemässen Kantenverbindung;
- Figur 2b: einen Korpus mit Kantenverbindungen gemäss der Figur 2a;
- Figur 3a: eine perspektivische Ansicht einer weiteren Ausführungsform der erfindungsgemässen Kantenverbindung;
- Figur 3b: einen Korpus mit Kantenverbindungen gemäss der Figur 3a;
- Figur 4: einen Querschnitt durch eine weitere Ausführungsform der erfindungsgemässen Kantenverbindung; und

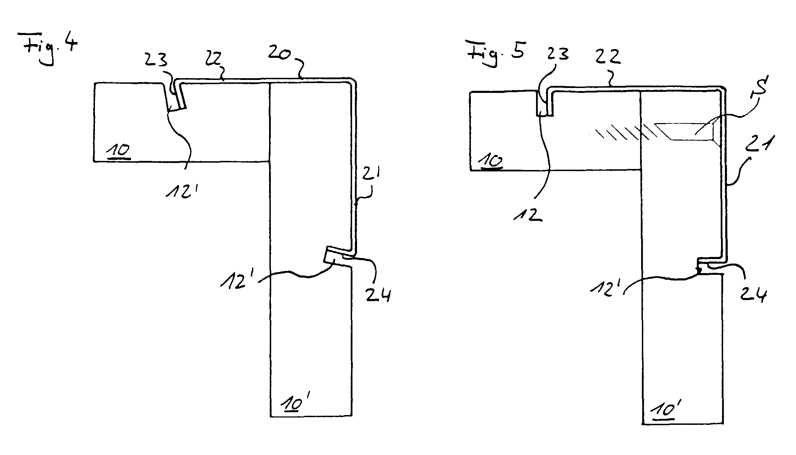

- Figur 5: einen Querschnitt durch eine weitere Ausführungsform der erfindungsgemässen Kantenverbindung.

Es ist vorweg klargestellt, dass es sich bei den hier als Flächenelementen bezeichneten Elementen meist um Platten handelt, die beispielsweise Wandelemente von zu erstellenden Möbeln bilden.

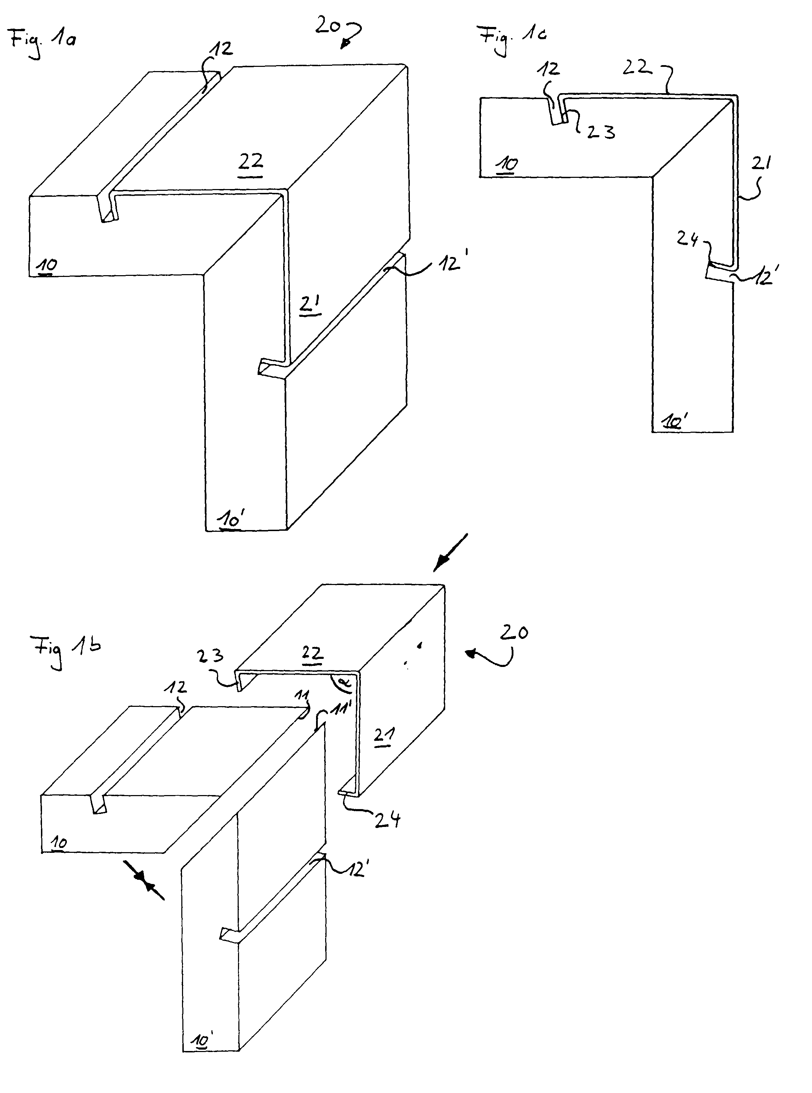

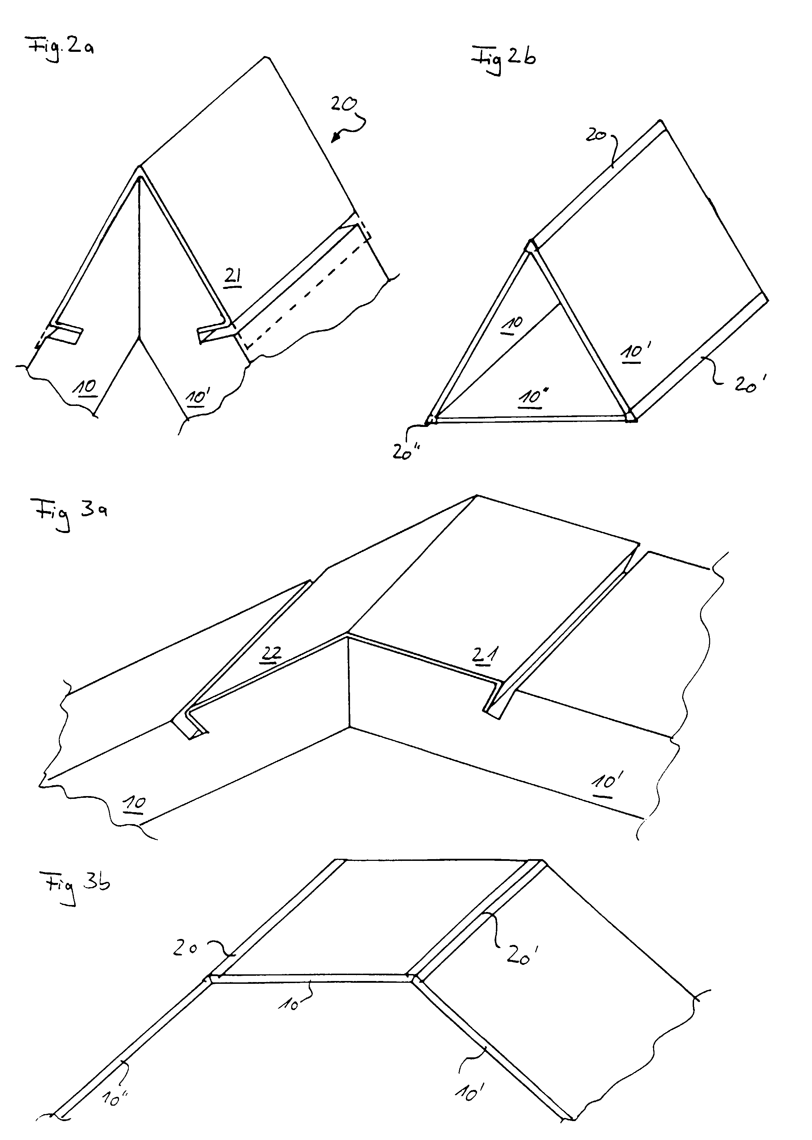

In der Figur 1 ist eine Verbindung zweier Flächenelemente 10, 10' gemäss der vorliegenden Erfindung dargestellt. Die Enden der Flächenelemente 10,10' sind auf Gehrung geschnitten und weisen an den Aussenseiten je eine Nut 12,12' auf, die parallel zu den Aussenkanten 11,11' verlaufen. Im gezeigten Beispiel sind die Gehrungen so geschnitten, dass die Flächenelemente 10,10' einen Winkel von 90 Grad einschliessen. Die beiden Flächenelemente werden von einem Kantenprofil 20 form- und/oder kraftschlüssig zusammengehalten. Da das Kantenprofil 20 satt an den Flächenelementen 10,10' anliegt beträgt der Innenwinkel α den die beiden Schenkel 21,22 des Kantenprofils 20 einschliessen ebenfalls 90 Grad oder einige Grad weniger. In dem dargestellten Ausführungsbeispiel sind endständig an beiden Schenkeln 21,22 jeweils Klemmrippen 23,24 angebracht. Diese Klemmrippen 23,24 greifen in die Nuten 12,12' ein. Der Abstand der Nuten 12,12' von den Aussenkanten 11,11' der Flächenelemente 10,10' ist dabei auf die Breite der Profilschenkel 21,22, und damit auf die Entfernung der Klemmrippen 23,24 vom jeweils gegenüberliegenden Profilschenkel 21,22 angepasst.
Beim Zusammenbau kann das Kantenprofil 20 entweder, wie in der Figur 1b angedeutet, seitwärts über die zusammengehaltenen Flächenelemente 10,10' geschoben werden, oder das Kantenprofil 20 wird bei zusammengehaltenen Flächenelementen 10,10' erst mit einer Klemmrippe 24 in eine Nut 12' eingeführt, dort gehalten und dann wird in einer Schwenkbewegung die zweite Rippe 23 in die zweite Nut 12 eingeschnappt. Die Art und Weise des Zusammenbaues richtet sich in erster Linie nach dem Material des Kantenprofils 20, respektive dessen Elastizität und nach der Stabilität der Flächenelemente 10,10'.
Da die Kantenverbindung einfach herzustellen ist, kann das herzustellende Möbelstück während der Herstellung für einzelne Produktionsschritte, zum Beispiel zur Oberflächenbehandlung oder zum Montieren der Beschläge montiert und wieder demontiert werden.
Die Flächenelemente 10, 10' und das Kantenprofil 20 sind schon alleine durch die Reibung ihrer Oberflächen, die miteinander in Kontakt stehen, kraftschlüssig verbunden und so am Verrutschen gehindert.
Das Kantenprofil 20 wirkt also wie eine Klammer, deren Klemmkraft sowohl durch die Materialwahl und die Wandstärke, wie auch durch leichtes Variieren des Innenwinkels a verändert werden kann.
In dem Ausführungsbeispiel der Figur 1 sind die Nuten 12,12' wie auch die Rippen 23,24 einige Grad in Richtung der Klemmkraft geneigt, was der Verbindung zusätzliche Stabilität verleiht. Das heisst, dass die Klemmrippen 23,24 mit den Schenkeln 22,21 einen Innenwinkel von kleiner als 90 Grad einschliessen und die Klemmnuten 12,12' analog dazu um einige Grad in Richtung des gegenüberliegenden Flächenelementes 10, 10' geneigt sind. Es hat sich als vorteilhaft erwiesen diese Innenwinkel, die die Klemmrippen 23,24 mit den Schenkeln 22,21 einschliessen, zwischen 75 und 85 Grad, bevorzugterweise etwa 80 bis 83 Grad zu wählen. Dadurch wird die Schnapp-Montage der Profilabschnitte wesentlich erleichtert.

Idealerweise werden mit einer Kantenverbindung gemäss Figur 1 je vier Flächenelemente 10 mit vier Kantenprofilabschnitten 20 zu einem rechteckigen Korpus verbunden. Es hat sich jedoch gezeigt, dass schon die Verbindung von zwei Flächenelementen 10,10' mit einem Kantenprofil 20 in sich äusserst stabil ist. Da die Klemmung nicht nur, wie in bekannten Systemen punktuell, sondern über die gesamte Breite der Flächenelemente 10,10' erfolgt, können die auftretenden Kräfte an jedem Punkt der Klemmverbindung auf einem Minimum gehalten werden. Dies ist besonders bei Flächenelementen aus relativ weichem Material, wie zum Beispiel Nadelholz, von Vorteil. Hier könnte es sonst im Bereich der Nuten leicht zu Druckschäden kommen, was die Stabilität der Klemmverbindung stark beeinträchtigen würde.
Wie in den Figuren 2 und 3 dargestellt ist, kann die erfindungsgemässe Kantenverbindung auch für den Zusammenbau von prismenförmigen Körpern mit drei- oder mehreckiger Grundfläche benutzt werden. Je nach Fall müssen nur die Winkel für die Kantenprofile 20,20',20'' und die Gehrungswinkel der Flächenelemente 10,10',10'' aufeinander abgestimmt werden.

Um die Produktion, zum Beispiel in der Möbelschreinerei möglichst einfach zu gestalten, hat es sich als vorteilhaft erwiesen den Neigungswinkel der Nut 12,12' im Flächenelement 10,10' bei allen Ausführungsformen konstant zu halten, und nur die Neigung der Klemmrippen 23,24 auf diesen Winkel hin zu optimieren.
Die Kantenprofile 20 sind vorteilhafterweise aus Metallblech geformt oder aus Kunststoff extrudiert.
Die Flächenelemente 10 sind in der Regel aus Furnier- oder Massivholz, können jedoch auch aus Kunststoff, Leichtmetall oder sogar Stein hergestellt sein.
In allen Ausführungsvarianten der Erfindung, die in den Figuren dargestellt sind sitzt das Kantenprofil 20 den Flächenelementen 10,10' auf. Sollte dies aus technischen oder gestalterischen Gründen nicht gewünscht sein, so kann das Kantenprofil 20 jedoch auch versenkt werden. Die Wandstärke der Flächenelemente 10,10' wird in diesem Fall zwischen Nut 12 und Oberkante 11 etwa um die Wandstärke des Kantenprofils 20 verringert. Im zusammengebauten Zustand bildet das Kantenprofil 20 mit den Aussenflächen der Flächenelemente 10, 10' eine bündige Oberfläche und trägt nicht störend auf. Werden die Flächenelemente 10 aus Pressspan- oder Furnierholz hergestellt, so hat sich die erfindungsgemässe Kantenverbindung als besonders vorteilhaft erwiesen da die Schnittkanten vom Kantenprofil vollständig überdeckt werden und ein Nachbearbeiten ausgefranster Schnittkanten entfällt. Aus diesen Gründen kann es auch von Vorteil sein, die Klemmrippen 23,24 nicht endständig an den Schenkeln 21,22 anzuordnen, sondern die Schenkel 21,22 so zu verbreitern, dass die Profilschenkel 21,22 im zusammengebauten Zustand die Nuten 12,12' vollständig überdecken, wie dies zum Beispiel in der Figur 2a strichliniert angedeutet ist.

Wie bereits erwähnt, stimmt im Regelfall die Länge der Kantenprofilabschnitte mit der Breite der zu verbindenden Flächenelemente überein. Es können jedoch auch sehr breite Flächenelemente mit mehreren kürzeren Kantenprofilabschnitten verbunden werden oder pro Seite werden mehrere kurze Flächenelemente mit einem langen Kantenprofilabschnitt verbunden. Die Verbindung unterschiedlich breiter Flächenelemente 10 miteinander ist natürlich auch möglich.
Der gestalterischen Freiheit sind hier nur wenige Grenzen gesetzt.

Sollen wie in der Figur 4 dargestellt Flächenelemente 10,10' miteinander verbunden werden, die nicht auf Gehrung zugeschnitten, sondern gerade oder stumpf sind, so kann eine stabile Verbindung mittels der Kantenprofile 20 durch die zusätzliche Verwendung von Sicherungselementen S, wie zum Beispiel Schrauben oder Dübeln gewährleistet werden. Diese zusätzlichen Sicherungselemente S dienen weniger der Verbindung der Flächenelemente 10,10' untereinander, sondern sie sollen ein Verkippen der Flächenelemente gegeneinander und damit ein ungewolltes Lösen der Kantenverbindung verhindern.

Sollen mehr als zwei Flächenelemente 10 entlang einer Kante miteinander verbunden werden, so können Kantenprofile 20 mit mehr als zwei Schenkeln eingesetzt werden. Eine kreuzweise Verbindung von vier Flächenelementen lässt sich mittels eines vierschenkligen Kreuzprofiles herstellen. Komplexe wabenförmige Strukturen mit erstaunlicher Stabilität können so auf einfachste Weise erstellt werden.

Obwohl in der obigen Beschreibung hauptsächlich von Möbelstücken die Rede war, ist es für den Fachmann offensichtlich, dass die erfindungsgemässe Kantenverbindung sich nicht nur für Möbel im engeren Sinn wie Schränke, Korpusse, Bürogestelle und Regale sondern auch für möbelähnliche Produkte wie zum Beispiel Kisten und Türfutter nutzen lässt.

## Patentansprüche

1. Kantenverbindung aus einem mindestens zweischenkligen Kantenprofil (20) und mindestens zwei Flächenelementen (10,10') wobei Kantenprofil (20) und Flächenelemente (10,10') miteinander klemmend lösbar verbindbar sind, dadurch gekennzeichnet, dass an der Innenseite von Schenkeln (21,22) des Kantenprofiles (20) Klemmelemente (23,24) angeordnet sind und die Flächenelemente (10,10') an ihren Aussenseiten Klemmnuten (12,12') aufweisen, wobei im verbundenen Zustand die Klemmelemente (23,24) in die Klemmnuten (12,12') kraftschlüssig eingreifen und sich das Kantenprofil (20) mindestens annähernd über die gesamte Länge der Aussenkanten (11,11') erstreckt.

2. Kantenverbindung gemäss Anspruch 1, dadurch gekennzeichnet, dass die Kontaktflächen der Flächenelemente zueinander (10,10') auf Gehrung geschnitten sind, wobei der Gehrungswinkel vorzugsweise die Hälfte des Innenwinkels (α) beträgt.

3. Kantenverbindung gemäss Anspruch 1, dadurch gekennzeichnet, dass der Innenwinkel (α) zwischen 45° und 180°, aber vorzugsweise zwischen 60° und 135° beträgt.

4. Kantenverbindung gemäss Anspruch 1, dadurch gekennzeichnet, dass sich Klemmnuten (12,12'), Klemmelemente (23,24) und Aussenkanten (11,11'), in Längsrichtung parallel zueinander erstrecken.

5. Kantenverbindung gemäss einem der Ansprüche 1 bis 4, dadurch gekennzeichnet, dass die Klemmelemente Klemmrippen (23,24) sind.

6. Kantenverbindung gemäss Anspruch 5, dadurch gekennzeichnet, dass die Klemmrippen (23,24) mit den Schenkeln (22,21) einen Innenwinkel von kleiner als 90° einschliessen und die Klemmnuten (12,12') analog dazu um einige Grad geneigt sind.

7. Kantenverbindung gemäss Anspruch 1, dadurch gekennzeichnet, dass das Kantenprofil (20) vier Schenkel (21,22) zur klemmenden Verbindung von vier Flächenelementen (10) aufweist.

8. Kantenverbindung gemäss Anspruch 1, dadurch gekennzeichnet, dass die Flächenelemente (10,10') stumpf aneinanderstossen und durch Sicherungselemente (S) am Verkippen gehindert sind.

9. Kantenverbindung gemäss einem der vorhergehenden Ansprüche, dadurch gekennzeichnet, dass die Kantenprofile versenkt angeordnet sind.

10. Kantenverbindung gemäss Anspruch 1, dadurch gekennzeichnet, dass die Kantenprofile aus Blech geformt oder aus Metall oder aus Kunststoff extrudiert sind.

11. Möbelelement hergestellt mit einer Kantenverbindung gemäss der Ansprüche 1 bis 8, dadurch gekennzeichnet, dass es aus Flächenelementen (10,10',10'') und Kantenprofilen (20,20',20") zusammengesetzt ist und eine Prismenform mit einer mindestens dreieckigen Grundfläche aufweist.
